# EUROPÄISCHE PATENTSCHRIFT

(11) **EP 0 385 140 B1**
(45) Veröffentlichungstag und Bekanntmachung des Hinweises auf die Patenterteilung: **08.02.1995**
(21) Anmeldenummer: 90102309.3
(22) Anmeldetag: 06.02.1990
(51) Int. Cl.: B61D 25/00, B60J 1/10

(54) **Halterung für eine Fensterscheibe, insbesondere für Schienenfahrzeuge**
Retention frame for a window pane, especially in a railway vehicle
Cadre de retenue d'une glace de baie notamment pour véhicule ferroviaire

(30) Priorität: 28.02.1989 DE 3906276
(43) Veröffentlichungstag der Anmeldung: 05.09.1990
(73) Patentinhaber: J.C.F. KAUFMANN METALLWARENWERK GMBH & CO. KG, D-42327 Wuppertal (DE)
(72) Erfinder: Otto, Hermann, D-5600 Wuppertal 2 (DE); Christeller, Reinhard, CH-4310 Rheinfelden (CH)
(74) Vertreter: Klingseisen, Franz, Dipl.-Ing.

(56) Entgegenhaltungen:
- EP-A- 0 186 499
- DE-U- 8 509 910
- GB-A- 2 031 979
- US-A- 4 364 209

## Beschreibung

Die Erfindung betrifft eine Halterung für eine Fensterscheibe nach dem Oberbegriff des Anspruchs 1.

Eine Halterung dieser Art ist aus US-A-4 364 209 bekannt, wobei die Fensterscheibe in ein im Querschnitt U-förmiges Profil eingesteckt wird, das auf dem Außenumfang mit einem Ansatz bzw. einer Haltelippe versehen ist, die einen Absatz am Fensterrahmen hintergreift. Durch das Einstecken der Fensterscheibe in das U-förmige Profil wird keine feste Halterung erzielt. Um die Fensterscheibe gegen Vibrationen stärker abzustützen, ist es ferner bekannt, zwischen den Umfang des U-förmigen Profils und die Haltelippe eine federnd nachgiebige, keilförmige Leiste einzusetzen, die aber ein Abtrennen der Haltelippe behindert, wenn die Scheibe ausgebaut werden soll.

Bei Hochgeschwindigkeitszügen treten beim Durchfahren eines Tunnels an den Fensterscheiben Lastwechsel in der Größenordnung bis zu +/- 6000 Pa auf, weswegen die Fensterscheiben sehr fest verankert werden müssen, um ein Lösen aus der Halterung auch nach langer Betriebsdauer zu vermeiden. Es ist bekannt, die Fensterscheiben längs des Umfangs mit dem Rahmen zu verkleben. Hierdurch erhält man zwar eine sehr gute Halterung der Fensterscheibe, jedoch ist der Einbau der Scheibe relativ aufwendig, und vor allem ist der Ausbau einer zerbrochenen Scheibe aus dem Rahmen außerordentlich mühsam und zeitaufwendig, weil die feste Verklebung der Scheibenränder gelöst und der Rahmen für die Aufnahme einer neuen Scheibe von Verklebungsresten gereinigt werden muß. Es besteht zwar die Möglichkeit, den Rahmen mit der zerbrochenen Scheibe von der Wagonwand zu lösen und durch einen neuen Rahmen mit Scheibe zu ersetzen, jedoch muß auch in diesem Fall der Rahmen entsprechend aufwendig bearbeitet werden, wenn man den Rahmen wiederverwenden und nicht als Abfall aussondern will. Letzteres wäre mit entsprechend hohen Kosten verbunden.

Der Erfindung liegt die Aufgabe zugrunde, eine Halterung der eingangs angegebenen Art so auszubilden, daß trotz fester und hohen Lastwechseln standhaltender Halterung die Fensterscheibe leicht in den Rahmen ein- und aus dem Rahmen ausgebaut werden kann.

Diese Aufgabe wird erfindungsgemäß durch die Merkmale im kennzeichnenden Teil des Anspruchs 1 gelöst. Durch die Befestigung der für die Halterung vorgesehenen Ansätze auf einer Leiste, die auf dem Scheibenumfang durch Kleben starr befestigt ist, erhält man eine feste Halterung der Scheibe, während andererseits die Seitenflächen der Fensterscheibe für die Anlage eines Abdeckprofils und des Stützprofils freibleiben. Das Abdeckprofil schützt die abtrennbaren Ansätze gegen Druckeinwirkungen von außen und zugleich deckt es den Rahmen der Fensterscheibe nach außen ab, wobei durch die keilförmige Versteifungsleiste dieses die gesamte Halterung abdeckende Abdeckprofil leicht abgenommen werden kann, wenn die Fensterscheibe ausgebaut werden soll.

Beispielsweise Ausführungsformen der Erfindung werden nachfolgend anhand der Zeichnung näher erläutert. Es zeigen
- Fig. 1: einen Querschnitt durch einen beispielsweise rechteckigen Rahmen mit Fensterscheibe, der in eine Waggonwand eingebaut ist,
- Fig. 2: in entsprechender Darstellung eine abgewandelte Ausführungsform mit einem abgeänderten Rahmenprofil.

Mit 1 ist die Wagonwand bezeichnet, an der ein Schenkel 2 auf der Wagoninnenseite vorsteht. An dem Schenkel 2 ist mittels Schrauben 3 ein Rahmenprofil 4, beispielsweise aus Aluminium, befestigt, das bei dem dargestellten Ausführungsbeispiel im Bereich der Schraubbefestigung im Querschnitt U-förmig ausgebildet ist und auf der der Fensterscheibe 5 zugewandten Seite einen über die Scheibendicke hinaus verlängerten Schenkel 6 aufweist, der nach innen vorsteht und mit einem etwa senkrecht abstehenden Vorsprung 7 versehen ist, der über den Rand der Scheibe 5 vorsteht und ein Gummiprofil 8 abstützt. Auf der der Scheibe 5 zugewandten Seite des Schenkels 6 sind zwei hintereinander liegende Absätze 9 in der Form von Nuten ausgebildet, die längs des Innenumfangs des Profils 4 verlaufen.

Die bei dem dargestellten Ausführungsbeispiel aus mehreren Einzelscheiben aufgebaute Fensterscheibe 5, die beispielsweise eine Dicke von 40 mm haben kann, ist auf dem Umfang mit einer Gummibeschichtung 10 versehen, die mit der Scheibe verklebt ist. Auf der Gummibeschichtung 10 ist eine Leiste 11 aufgeklebt, die sich über die Dickenabmessung der Scheibe 5 erstreckt und mit zwei hintereinander liegenden Ansätzen 12 versehen ist, die schräg nach außen auf dem Umfang vorstehen und die durch die Nuten ausgebildeten Absätze 9 hintergreifen. Im Bereich der Ansätze 12 weist die Leiste 11 etwa einen V-förmigen Querschnitt auf, wobei ein Schenkel am Scheibenumfang festgeklebt ist und der andere Schenkel den Ansatz 12 bildet. Die Ansätze 12 sind in Richtung der Ebene der Fensterscheibe 5 elastisch und in der Richtung senkrecht dazu steif. Beispielsweise kann die Leiste 11 mit Ansätzen 12 aus Hartgummi bestehen, jedoch kann auch ein anderes Material, wie beispielsweise Kunststoff vorgesehen werden.

Die Leiste 11 erstreckt sich abschnittsweise über den gesamten Umfang der Scheibe 5, wobei in gewissen Abständen zwischen diesen Abschnitten der Leiste 11 Distanzstücke 13 in den durch das Profil 4 gebildeten Rahmen eingesetzt sind. Diese Distanzstücke 13, die beispielsweise aus Kunststoff bestehen, greifen mit entsprechenden Vorsprüngen in die Umfangsnuten im Profil 4 ein und liegen mit einer glatten Fläche an der Gummibeschichtung 10 auf dem Umfang der Scheibe 5 an. Diese Distanzstücke 13 sind lose in das Profil 4 eingesetzt und sie sind mit der Fensterscheibe 5 bzw. mit deren Gummibeschichtung 10 auch nicht verklebt.

Beim Einbau der Scheibe 5 wird nach Einsetzen des Gummiprofils 8 und dieser Distanzstücke 13 in das Rahmenprofil 4 die Scheibe 5 von außen in das Rahmenprofil eingedrückt, wobei die Ansätze 12 in der Ebene der Scheibe 5 elastisch nachgeben und danach an den durch die Umfangsnuten gebildeten Absätzen 9 einrasten. Das Gummiprofil 8 zwischen Vorsprung 7 und Scheibe 5 drückt die Scheibe 5 über die Ansätze 12 an den Absätzen 9 an und dichtet zugleich die Scheibe gegenüber dem Rahmen ab. Hierzu übergreift das Gummiprofil 8 mit einem Absatz 14 den abgewinkelten Vorsprung 7 des Rahmenprofils und drückt über zwei Anlageflächen 15,15′ gegen die Scheibe 5. Eine nach innen ragende Lippe 16 des Gummiprofils 8 übergreift das Ende einer Verkleidungswand 17.

Auf der Außenseite ist ein Abdeckprofil 18 aus Gummi in den U-förmigen Teil des Rahmenprofils 4 eingesetzt, wobei die nach innen abgewinkelten Schenkelenden des Rahmenprofils 4 einen nach innen ragenden Vorsprung des Gummiprofils 18 hintergreifen. Mit 19 ist eine im Querschnitt etwa keilförmige Versteifungsleiste bezeichnet, die in eine entsprechende Ausnehmung des Gummiprofils 18 eingedrückt ist und dieses einerseits im Rahmenprofil 4 festlegt und andererseits die seitlichen Lippen 20,20′ des Gummiprofils 18 an der Scheibe 5 bzw. der Wagonwand 1 anliegend hält. Mit 21 ist eine Entlüftungsbohrung an der Lippe 20′ des Profils 18 bezeichnet.

Die auf diese Weise in das Rahmenprofil 4 eingebaute Scheibe 5 hält erheblichen Druckschwankungen stand, wobei im Falle einer Druckbeanspruchung von innen nach außen die Scheibe durch die in dieser Richtung steifen Ansätze 12 an den Absätzen 9 abgestützt wird, während bei einer Druckbeanspruchung von außen nach innen die Scheibe 5 über das Gummiprofil 8 an dem über den Rand der Scheibe 5 nach innen vorstehenden Vorsprung 7 des Rahmenprofils 4 abgestützt wird. Dadurch, daß der Vorsprung 7 den Rand der Scheibe 5 übergreift, wird der dazwischen liegende Abschnitt des Gummiprofils 8 nur auf Druck beansprucht und nicht auf Scherung. Durch die Distanzstücke 13 werden bei auftretenden Lastwechseln an der Scheibe 5 die Ansätze 12 nicht in Richtung der Ebene der Scheibe 5 beansprucht, da die über den Umfang der Scheibe verteilten Distanzstücke 13 die Scheibe 5 senkrecht zur Scheibenebene führen.

Wenn eine zerbrochene Scheibe 5 aus dem Rahmenprofil 4 ausgebaut werden soll, wird das Abdeckprofil 18 abgenommen, worauf ein messerartiges Werkzeug, beispielsweise eine scharfe Spachtel oder dgl., zwischen Rahmenprofil 4 und Scheibenumfang eingeführt wird und die Ansätze 12 von der Leiste 11 abgetrennt werden. Danach kann die Scheibe 5 ohne weiteres aus dem Rahmenprofil 4 entnommen und eine neue Scheibe eingesetzt werden. Die Distanzstücke 13 sind in ihrer Dickenabmessung zwischen Rahmenprofil und Scheibe so ausgelegt, daß bei eingebauter Scheibe ein ausreichender Abstand 22 zwischen Außenumfang der Leiste 11 und Innenumfang des Rahmenprofils 4 für den Eingriff eines Werkzeugs verbleibt.

Sowohl der Einbau als auch der Ausbau der Scheibe 5 kann von außen erfolgen, wobei im Falle des Einbaus zunächst das Gummiprofil 8 in das Rahmenprofil 4 eingesetzt und danach die Scheibe eingedrückt werden kann.

Die Distanzstücke 13 können beispielsweise eine Längsabmessung von etwa 100 mm haben, wobei zwei bis drei solcher Distanzstücke 13 auf einer Seite des Rahmens vorgesehen sein können, während zwischen den Distanzstücken 13 die Leiste 11 am Umfang der Scheibe 5 festgeklebt ist.

Es sind verschiedene Abwandlung der beschriebenen Ausgestaltung möglich. So können beispielsweise die Ansätze 12 eine andere Querschnittsform haben, wobei sie den Querschnitt der die Absätze 9 bildenden Umfangsnuten ausfüllen können.

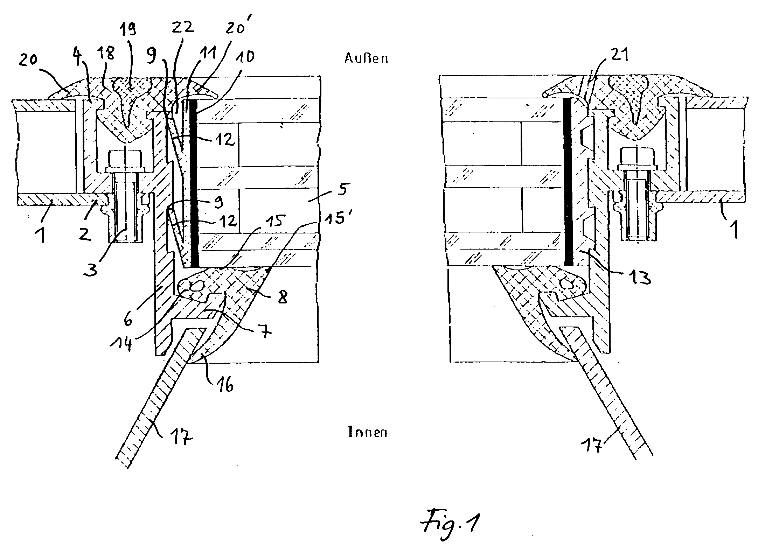

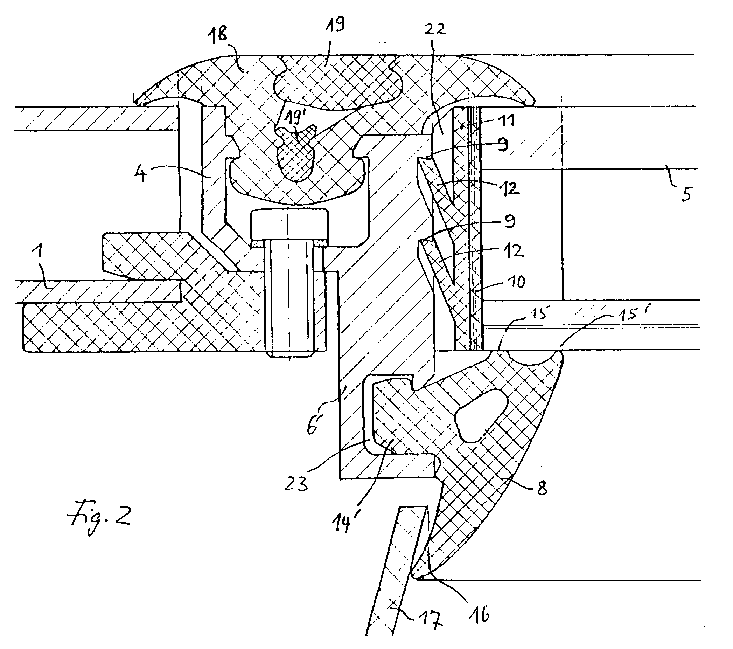

Fig. 2 zeigt eine Ausführungsform, bei der gleiche oder entsprechende Bauteile mit den gleichen Bezugszeichen wie in Fig. 1 versehen sind. Anstelle des auf dem Rahmeninnenumfang nach innen vorstehenden Vorsprungs 7 für die Abstützung des Gummiprofils 8 ist bei der Ausführungsform nach Fig. 2 auf der Innenumfangsfläche des Rahmens 4 im Bereich des Schenkels 6′ eine Nut 23 ausgebildet, in die ein Absatz 14′ des Gummiprofils 8 eingreift, das bei diesem Ausführungsbeispiel einen dickeren Mittelbereich als bei der Ausführungsform nach Fig. 1 aufweist. Das Rahmenprofil 4 ist über die gesamte Rahmentiefe mit einer Abmessung des Innenumfangs versehen, die größer ist als der Außenumfang der Fensterscheibe 5, so daß die Scheibe 5 bei einer Druckbeanspruchung von außen nur über das Gummiprofil 8 abgestützt wird. Auch bei diesem Aufbau wird die Scheibe 5 von außen eingebaut und von außen auch demontiert, wie dies im Zusammenhang mit Fig. 1 beschrieben wurde, jedoch besteht zusätzlich die Möglichkeit, daß durch Lösen des Gummiprofils 8 im Notfall durch eine nicht dargestellte Einrichtung die Fensterscheibe 5 als Notausstieg verwendet werden kann. Wenn durch die nicht dargestellte Löseeinrichtung das Gummiprofil 8 entfernt wird, kann die Fensterscheibe 5 ohne weiteres nach innen bewegt und aus dem Rahmen 4 herausgenommen werden, so daß ein Notausstieg vorhanden ist.

Bei der Ausführungsform nach Fig. 2 sind die die Absätze 9 bildenden Nuten mit einer anderen Querschnittsform als in Fig. 1 ausgebildet. Ferner ist wegen der im Querschnitt breiteren Ausgestaltung des Abdeckprofils 18 eine zusätzliche Versteifungsleiste 19′ in eine entsprechende Ausnehmung des Gummiprofils 18 eingedrückt, wobei diese im Querschnitt kleinere Versteifungsleiste 19′ innen liegt und durch eine im Querschnitt größere Versteifungsleiste 19 außen abgedeckt wird. Im übrigen entspricht der Aufbau nach Fig. 2 dem nach Fig. 1.

Die beschriebene Halterung für eine Fensterscheibe kann auch zur Befestigung anderer flächiger Bauteile in einer Wand oder dergleichen verwendet werden, sie ist nicht auf Fensterscheiben für Schienenfahrzeuge beschränkt.

## Patentansprüche

1. Halterung für eine Fensterscheibe (5) in einem in einer Wand (1) eingesetzten Rahmen (4), insbesondere für Schienenfahrzeuge, mit einem auf dem Umfang der Scheibe (5) angebrachten Halteelement (11), das wenigstens einen in der Scheibenebene vorstehenden Ansatz (12) aufweist, der in der Richtung senkrecht zur Scheibenebene steif und in Richtung der Scheibenebene nachgiebig ausgebildet ist, einen Absatz (9) am Rahmen (4) hintergreift und abtrennbar ist, wobei die Scheibe (5) über den Ansatz (12) am Rahmen (4) durch ein Gummiprofil (8) anliegend gehalten ist, das am Rahmen (4) abgestützt ist, und wobei wenigstens auf der Unterseite der Fensterscheibe (5) Distanzstücke (13) zwischen Scheibenumfang und Rahmen (4) vorgesehen sind, die die Scheibe abstützen,
**dadurch gekennzeichnet,**
daß das Halteelement als Leiste (11) ausgebildet ist, deren Breite der Dicke der Scheibe (5) entspricht und die auf der Umfangsfläche der Scheibe (5) durch Kleben so befestigt ist, daß die Leiste (11) nicht über die Scheibendicke hinausragt, und
daß auf der dem Gummiprofil (8) gegenüberliegenden Seite in eine Nut des Rahmens (4) eine Abdeckprofil (18) eingesetzt ist, das mit seitlichen Lippen (20, 20') versehen ist, die an der Scheibe (5) und an der Wand (1) unter Abdeckung des Rahmens (4) dicht anliegen und durch eine in das Abdeckprofil (18) eingesetzte, etwa keilförmige Versteifungsleiste (19) auseinandergespreizt werden.

2. Halterung nach Anspruch 1,
dadurch gekennzeichnet,
daß die Ansätze (12) im Querschnitt etwa V-förmig ausgebildet sind, wobei ein Schenkel den Ansatz (12) bildet und der anderer Schenkel zur Befestigung auf dem Scheibenumfang dient.

3. Halterung nach den Ansprüchen 1 und 2,
dadurch gekennzeichnet,
daß die Ansätze (12) mit Rastwirkung in eine Nut auf der Innenumfangsfläche des Rahmens (4) einsetzbar sind, wobei ein Seitenrand der Nut den Absatz (9) bildet.

4. Halterung nach Anspruch 1,
dadurch gekennzeichnet,
daß am Rahmen (4) auf der Innenseite eine den Rand der Fensterscheibe (5) übergreifender Vorsprung (7) zur Aufnahme des Gummiprofils (8) ausgebildet ist.

5. Halterung nach Anspruch 1,
dadurch gekennzeichnet,
daß auf der Innenumfangsfläche des Rahmens (4) eine Nut (23) zur Aufnahme des die Fensterscheibe (5) abstützenden Gummiprofils (8) ausgebildet ist, wobei der Innenumfang des Rahmens (4) über die gesamte Rahmentiefe größer ausgebildet ist als der Außenumfang der Fensterscheibe (5), so daß diese auch nach innen herausnehmbar ist.

6. Halterung nach Anspruch 1,
dadurch gekennzeichnet,
daß über den Umfang der Scheibe in Abständen Distanzstücke (13) zwischen Scheibe (5) und Rahmen (4) eingesetzt sind, welche die Scheibe (5) in einem vorgegebenen Abstand vom Innenumfang des Rahmens (4) halten.

7. Halterung nach Anspruch 1,
dadurch gekennzeichnet,
daß in das Abdeckprofil (18) eine zusätzliche Versteifungleiste (19') eingesetzt ist, die das Abdeckprofil in der Nut des Rahmens (4) hält und durch die äußere Versteifungsleiste (19) abgedeckt wird.

## Claims

1. A bracket for a window pane (5) in a frame (4) inserted in a wall (1), more particularly for railway vehicles, comprising a retaining member (11) mounted on the circumference of the pane (5), which retaining member has at least one projection (12) protruding in the plane of the pane, which projection is rigid in the direction at right angles to the plane of the pane and resilient in the direction of the plane of the pane, which engages behind a recess (9) on the frame (4) and which may be detached from it, the pane (5) being abuttingly held on the frame, via the projection (12), by means of a rubber section (8) which is supported on the frame (4), and at least on the underside of the window pane (5) spacers (13) being provided between the circumference of the pane and the frame (4) which support the pane, characterised in that the retaining element is in the form of a strip (11) whose width corresponds to the thickness of the pane (5) and which is secured to the peripheral area of the pane (5) by gluing so that the strip (11) does not protrude beyond the pane thickness, and in that, on the side opposite the rubber section (8), there is a cover section (18) which is inserted in a groove of the frame (4) and provided with lateral lips (20, 20') which closely abut on the pane (5) and the wall (1), while covering the frame (4) and are spread out by a substantially wedge-shaped reinforcing strip (19) inserted in the cover section (18).

2. A bracket according to claim 1, characterised in that the projections (12) have a v-shaped cross-section, one leg forming the projections (12) and the other leg being used for attachment to the circumference of the pane.

3. A bracket according to claims 1 and 2, characterised in that the projections (12) may be inserted with a stop action into a groove provided on the inner peripheral area of the frame (4), one side edge of the groove forming the projection (9).

4. A bracket according to claim 1, characterised in that a projection (7) engaging over the edge of the window pane (5) is formed on the inside frame (4) in order to receive the rubber section (8).

5. A bracket according to claim 1, characterised in that a groove (23) is formed on the inner peripheral area of the frame (4) in order to receive the rubber section (8) supporting the window pane (5), the inner circumference of the frame (4) being larger over the entire depth of the frame, than the outer circumference of the window pane (5) so that the window pane may also be removed inwardly.

6. A bracket according to claim 1, characterised in that spacers (13) are inserted, at a spacing, between the pane (5) and the frame (4) over the circumference of the pane, said spacers holding the pane (5) at a predetermined distance from the inner circumference of the frame.

7. A bracket according to claim 1, characterised in that an additional reinforcing strip (19') is inserted in the cover profile (18) which retains the cover profile in the groove of the frame (4) and is covered by the outer reinforcing strip (19).

## Revendications

1. Monture servant à monter une vitre de fenêtre (5) dans un cadre (4) installé dans une paroi (1), notamment pour véhicules ferroviaires, comprenant un élément de retenue (11) monté sur la périphérie de la vitre (5), qui présente au moins un appendice (12) en saillie dans le plan de la vitre, qui est rigide dans la direction perpendiculaire au plan de la vitre et flexible dans la direction parallèle au plan de la vitre, qui s'accroche derrière un talon (9) du cadre (4) et peut en être détaché, la vitre (5) étant maintenue appliquée contre le cadre (4) par l'appendice (12) avec interposition d'un profilé en caoutchouc (8) soutenu par le cadre (4), des entretoises (13) supportant la vitre étant prévues entre la périphérie de la vitre et le cadre (4), du moins sur le côté inférieur de la vitre (5),
caractérisée en ce que l'élément de retenue est constitué par un rebord (11) dont la largeur correspond à l'épaisseur de la vitre (5) et qui est fixé à la surface périphérique de la vitre (5) par collage de manière que le rebord (11) ne déborde pas au-delà de l'épaisseur de la vitre, et
en ce que, sur la face située à l'opposé du profilé en caoutchouc (8), est prévu un profilé de fermeture (18) installé dans une rainure du cadre (4) et muni de lèvres latérales (20,20') qui s'appliquent étroitement contre la vitre (5) et contre la paroi (1) en recouvrant le cadre (4) et qui sont écartées par une nervure de renforcement (19) à peu près en forme de coin installée dans le profilé de fermeture (18).

2. Monture selon la revendication 1, caractérisée en ce que les appendices (12) sont à peu près en forme de V en section transversale, une branche formant l'appendice (12) et l'autre branche servant pour la fixation sur la périphérie de la vitre.

3. Monture selon les revendications 1 et 2, caractérisée en ce que les appendices (12) peuvent s'encliqueter dans une rainure prévue sur la surface périphérique intérieure du cadre (4), un bord latéral de la rainure formant le talon (9).

4. Monture selon la revendication 1, caractérisée en ce qu'une saillie (7) empiétant sur le bord de la vitre (5) est formée sur le cadre (4), sur sa face intérieure, pour recevoir le profilé en caoutchouc (8).

5. Monture selon la revendication 1, caractérisée en ce qu'une rainure (23) destinée à recevoir le profilé de caoutchouc (8) qui donne appui à la vitre (5) est formée sur la surface périphérique intérieure du cadre (4), la périphérie intérieure du cadre (4) étant plus grande que la périphérie extérieure de la vitre (5) sur toute la profondeur du cadre, de sorte que cette vitre peut aussi être déposée vers l'intérieur.

6. Monture selon la revendication 1, caractérisée en ce que des entretoises (13) qui maintiennent la vitre (5) à un écartement donné de la périphérie intérieure du cadre (4) sont installées entre la vitre (5) et le cadre (4) en des points espaces sur la périphérie de la vitre.

7. Monture selon la revendication 1, caractérisée en ce que, dans le profilé de fermeture (18), est installée une nervure de renforcement supplémentaire (19') qui maintient le profilé de fermeture dans la rainure du cadre (4) et qui est recouverte par la nervure de renforcement extérieure (19).
